(19) Europäisches Patentamt

European Patent Office

Office européen des brevets

(11) **EP 1 494 136 A1**

(12) **EUROPEAN PATENT APPLICATION**

(43) Date of publication:
**05.01.2005 Bulletin 2005/01**

(51) Int Cl.⁷: **G06F 17/30**, G06T 7/00

(21) Application number: **04013935.4**

(22) Date of filing: **15.06.2004**

| | |
|---|---|
| (84) Designated Contracting States: **AT BE BG CH CY CZ DE DK EE ES FI FR GB GR HU IE IT LI LU MC NL PL PT RO SE SI SK TR** Designated Extension States: **AL HR LT LV MK** | (72) Inventors: • **Chupeau, Bertrand 92648 Boulogne Billancourt (FR)** • **Oisel, Lionel 92648 Boulogne Billancourt (FR)** • **Le Clerc, Francois 92648 Boulogne Billancourt (FR)** |
| (30) Priority: **01.07.2003 FR 0307929** | |
| (71) Applicant: **Thomson Licensing S.A. 92100 Boulogne Billancourt (FR)** | (74) Representative: **Le Dantec, Claude et al Thomson, 46, Quai Alphonse Le Gallo 92100 Boulogne-Billancourt (FR)** |

(54) **Method and device for measuring visual similarity of images**

(57)     The invention relates to a device and a method for measuring visual similarity between two images.

One image (Q) being referred to as the model and one image (T) being referred to as the target, the method comprises a prior step (E2) of segmenting the images into regions ($Q_i$, $T_i$), with each region there being associated at least one attribute (F) representative of at least one characteristic of the region. It furthermore comprises the steps of

- calculating (E3) the visual similarity between the pairs ($Q_i$, $T_i$) of possible regions of the two images (Q, T),
- selecting (E4) a certain number of pairs ($Q_i$, $T_i$) of regions whose similarity is greater than a first fixed threshold ($\varepsilon$),
- calculating (E9) the global similarity between the two images, based on the pairs ($Q_i$, $T_i$) of regions selected.

According to the invention, the step (E3) of calculating the visual similarity between the pairs ($Q_i$, $T_i$) of possible regions of the two images (Q, T) takes into account the distance ($D(Q_i, T_i)$) between the said attributes (F) of the regions ($Q_i$, $T_i$) matched and the areas of the regions ($Q_i$, $T_i$) matched.

Fig. 2

EP 1 494 136 A1

**Description**

The invention relates to a device and a method for measuring visual similarity.

The context of the invention is the content-based indexing of images and the searching via visual similarity of databases of still images.

Traditionally, these databases were indexed manually via keywords. The accumulation of immense quantities of digital data, on account of the accelerated growth in communication throughputs and in the capacity of storage devices, has made it necessary to develop robust tools for automatically annotating images via their content.

In a typical application of similarity-based searching, the user formulates his request with the aid of an example image and the system sends him back a list of images that are assumed to be visually much the same, and are ranked by increasing distances. The distance used is a distance between attributes extracted automatically from the images (that is why one speaks of indexing of images via their content).

The attributes used are of "low level", and are much like the image signal (colours, textiles, wavelet transform, etc.) as opposed to a "semantic" interpretation of the scene in terms of objects and events. The visual similarity calculated by the machine may sometimes not coincide with the semantic similarity expected by the user, this constituting the main limitation of these content-based indexation and search systems.

The first generation of content-based search systems use "global" attributes, that is to say those calculated over the entire image. The histogram of the colours present in the image is the typical example thereof. To take account of the notion of spatial location of the objects in the image, the next generation divides the image into regions and attaches "local" descriptors to each region.

An arbitrary partitioning of the image, such as a square grid for example, quite obviously does not coincide with the boundaries of the various objects which make up the image. A more precise description then consists in attaching the local descriptors to regions of any shape, which correspond to the objects or to their subparts, obtained via a segmentation algorithm. One thus hopes to achieve automatic calculation of visual similarity which is closer to the intuitive similarity perceived by a human observer, and which make it possible to recognize that two images are alike even if the similar objects are not to the same scale, not at the same position and make up only part of the scene.

As much as the calculation of a distance between two images described by local descriptors associated with a square grid is quasi-immediate, the global distance being the average of the distances between local attributes associated with blocks with the same spatial coordinates, nevertheless the solution is far from being intuitive when the two images are segmented into regions of any shapes.

The document by A. Natsev, R. Rasogi and K. Shim "Walrus : A similarity retrieval algorithm for image databases" published during the international conference "ACM SIGMOD internationale conference on management of data", Philadelphia June 99, proposes a measurement of visual similarity between two images segmented into regions of any shapes, the elementary distance between two local attributes being assumed known.

In this method, two regions $(Q_i, T_i)$ belonging respectively to two different images $(Q, T)$ are similar if the distance between two of their attributes $(F_1, F_2)$ is less than a threshold $\varepsilon$. A region of the image Q being matched with at most one region of T and vice versa. Among all the pairs of possible similar regions, that chosen being the one which maximizes a similarity criterion according to the following formula:

$$E(Q,T) = \frac{area\left(\bigcup_{i=1}^{p} Q_i\right) + area\left(\bigcup_{i=1}^{p} T_i\right)}{area(Q) + area(T)}$$

p being the number of similar regions between the images Q and T.

This method therefore makes it possible to measure the visual similarity through the fraction of the surface area of the two images constituted by matched regions.

The method proposed in this prior art proposes a suboptimal solution in which the pairs of candidate regions of maximum area are iteratively matched.

However, this method is very dependent on the threshold value $\varepsilon$. Once two regions have been declared visually similar because the distance between their attributes is less than $\varepsilon$, this binary choice is no longer reassessed in the remainder of the calculation. Too low a threshold will lead to a subestimate of the global similarity between the images, fixed too high it will lead to pairs of regions that are very alike or on the contrary very unalike being processed at the same level.

Moreover, when implementing the metric, the respective sizes (areas) of the regions matched in the two images are not taken into account. This makes it possible to be robust to changes of scale (that is to say of zoom factor) but leads to rather undesirable situations where a very small region is matched with an entire image, on the sole basis of their similarity in terms of attributes. Furthermore, such configurations are favoured by the global criterion of maximizing the matched surface areas.

The present invention proposes a method for measuring visual similarity taking into account the distance between attributes in the global criterion for maximizing the similarity for the determination of the list of pairs of matched regions. In this way, the present invention enables better measurement of similarity between images and can be used in image search applications based on measurement of visual similarity.

Accordingly, the present invention proposes a method for measuring visual similarity between two images, one image being referred to as the model and one image being referred to as the target, comprising a prior step of segmenting the images into regions, with each region there being associated at least one attribute representative of at least one characteristic of the region, comprising the steps of

- calculating the visual similarity between the pairs of possible regions of the two images,
- selecting a certain number of pairs of regions whose similarity is greater than a first fixed threshold,
- calculating the global similarity between the two images, based

  on the pairs of regions selected.

According to the invention, the step of calculating the visual similarity between the pairs of possible regions of the two images takes into account the distance between the said attributes of the regions matched and the areas of the regions matched.

According to a preferred mode of practice, the method furthermore comprises after the selection step and before the step of calculating global similarity, a step of exclusion on the basis of the list of pairs of regions selected, pairs of regions for which the ratio between their areas is greater than a second threshold or less than the inverse of the said second threshold.

In this way, it may be possible not to take account of the pairs of regions previously selected whose surface areas are too different in terms of size.

According to a preferred mode of practice, the step of calculating the visual similarity between all the pairs of possible regions of the two images weights the distance between the said attributes of the regions matched and the fraction between the surface area of the regions matched over the surface area of the two images.

According to a preferred mode of practice, the step of calculating the visual similarity between the pairs of possible regions of the two images and the step of selecting a certain number of pairs of regions whose similarity is greater than a first fixed threshold comprise for all the regions of the model image, the substeps of

- selecting a region of the model image,
- measuring the visual similarity between the region traversed and the regions of the target image,
- selecting the region exhibiting the greatest visual similarity with the image traversed.

This corresponds to a suboptimal solution which enables a decrease in the complexity of the calculations of similarity between all the possible regions. In effect, a matching of all the possible regions of the model image with all the possible regions of the target image and an a-posteriori decision of the pairs of regions is very expensive in computation time. The preferred mode of practice proposed makes it possible to minimize the calculations by taking a region of the model image, by measuring the visual similarity between this region and all the regions of the target image and by choosing the region of the target image exhibiting the greatest similarity with the region of the model image. The pair of regions which is thus formed is no longer reassessed thereafter and we move on to another region of the model image as long as some regions remain.

According to a preferred mode of practice, the substep of selecting a region of the model image, selects the region of the model image according to their ascending order of surface area.

In this way, the regions having a big surface area have priority in the search for regions exhibiting visual similarity.

The present invention also proposes a visual similarity device having the aforesaid advantages.

The present invention also proposes a computer program product comprising program code instructions able to implement the method according to the invention when the program is executed on a computer.

The invention will be better understood and illustrated by means of wholly nonlimiting, advantageous exemplary modes of practice and modes of implementation, with reference to the appended figures in which:

- Figure 1 represents a decomposition of an image into regions of any shape.
- Figure 2 represents a mode of practice of a flowchart of the operation of a device according to the invention.

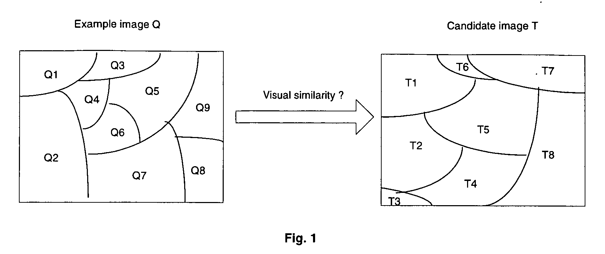

Figure 1 represents an example of decomposing an image Q called the decomposed model image into Q regions Qi. The image Q represents the example image submitted to the device according to the invention and for which the device must return similar images.

The image Q is an image divided into regions of any shape as opposed to a division into a square grid. The division into regions Qi corresponds to a division according to objects, or according to subparts of these objects, represented on the image. These subparts are obtained via a segmentation algorithm commonly employed by the person skilled in the art.

The image T, called the target image, represents an image of a database comprising images whose visual similarity with the selected image Q is searched for. The images of the database such as T, are also decomposed into regions using the same method of segmentation as the image Q.

The image Q can be an image proposed by the user or an image itself emanating from the database and selected by the user. Accordingly, the image Q is decomposed into regions Qi when it is submitted to the device according to the invention or it is previously decomposed into regions and stored in the database and its division into regions is associated with it.

With each region is associated at least one attribute F. F is representative of a characteristic of the image chosen, by way of nonlimiting illustration, from the texture, the colour. By way of alternative, the dominant coefficients of the wavelet transform may also be taken as attribute.

The attributes F associated with each region of the image are calculated and stored in the database with each image. They may also be calculated as and when an image is used by the device but this may slow down the measurement process considerably.

Various methods of calculating attributes exist and are well known to the person skilled in the art.

The method proposed calculates the distance between the attributes F of the regions Qi of the image Q and Ti of the image T.

The distance D calculated may be a distance of euclidian type by way of illustration. In the following equations, it is assumed that the distance D returns normalized values between 0 and 1.

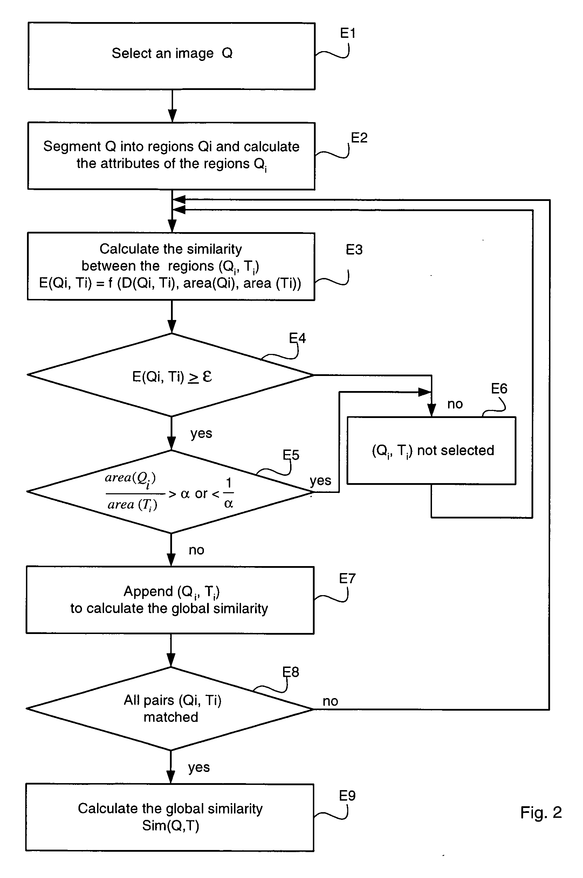

Figure 2 illustrates a method of calculating the similarity between an image Q and target images T according to a preferred mode of practice of the invention.

In step E1, the user selects an image Q for which he wishes to find images exhibiting visual similarity therewith.

Next, during step E2, the image Q is segmented into regions Qi. The number of regions Qi is dependent on the content of the image, the regions possibly corresponding to objects present in the image or to subparts of these objects. For each region of the image Qi, attributes representative of the visual content of this image are also calculated. These attributes may be representative of the colour, the texture or also correspond to the coefficients of a discrete cosine decomposition or a wavelet transformation.

When the image Q is an image of the database which will be searched for similar images, the image Q is already segmented and the attributes associated with the regions are already calculated and stored likewise in the database. In this case, the step E2 is optional and we go directly from step E1 to step E3.

In step E3, the possible similarity E between all the regions of the image Q and all the regions of the candidate images T is calculated using the following formula by way of illustration.

$$E(Q_i, T_i) = w*(1 - D(Q_i, T_i)) + (1 - w)*\frac{area(Q_i) + area(T_i)}{area(Q) + area(T)}$$

in which:

- w is a weighting factor,
- D(Qi, Ti) represents the distance between the attributes F of the regions Qi and Ti,
- Area(Qi) and area(Ti) represent the respective areas of the regions Qi and Ti, expressed in pixels,
- Area(Q) and area(T) represent the respective areas of the images Q and T expressed in pixels.

In a preferred mode of practice, the weighting factor w is fixed at the value 1/3.

The similarity calculated takes into account the distance D between the attributes F of the regions of the image T and the regions of the image Q by matching all the regions $Q_i$ of the image Q and all the regions $T_i$ of the images T and the ratio of the area covered by the regions to the total area of the images.

The weighting factor w makes it possible to give more importance to the area of the matched regions, taking account of the distance between their attributes. This is in contradistinction to the Natsev method described previously which takes into account the area but over regions already selected beforehand.

Next, during step E4, a selection of the pairs ($Q_i$, $T_i$) of regions that are the most similar is performed. Only the pairs of regions whose similarity is greater than a predetermined threshold ε are selected.

$$E(Q_i, T_i) \geq \varepsilon$$

In a preferred mode of practice, the threshold ε is fixed at the value 0.7.

When these pairs are not selected, we then go to step E6 in which these pairs are referenced as nonselected and may therefore possibly be matched with other regions then to step E3.

Then, out of the pairs of regions selected, certain pairs whose magnification/reduction factor is too large are excluded. The magnification/reduction factor is represented by the ratio of the surface areas of the two regions. For example, consider two regions Qi and Ti, then the magnification/reduction factor R can be represented by:

$$R = \frac{area(Q_i)}{area(T_i)}$$

When this ratio R is greater than a value α or less than a value 1/α, the pair of regions ($Q_i$, $T_i$) is excluded (step E6).

In a preferred mode of practice, the value α is fixed at 4.

In this mode of practice, the regions $Q_i$ are selected one after the other and we go from one region to another after having found a corresponding region $T_i$ exhibiting the maximum similarity with the region $Q_i$.

In another mode of practice, it would be conceivable to calculate all the possible similarities between all the regions and to thereafter select the pairs optimizing the total similarity of the image.

In another mode of practice, it would be conceivable to traverse the regions $Q_i$ in order of ascending size so as to preferentially find a region exhibiting optimal similarity for the largest regions.

During step E7, the pairs ($Q_i$, $T_i$) are selected and put aside, in a means of storage for example, and will no longer be selectable subsequently.

If all the pairs ($Q_i$, $T_i$) have been matched (step E8), we then go back to step E3, otherwise, we go to step E9.

During this step, in order to calculate the global similarity between the image Q and a candidate image T, the global similarity between the images Q and T is calculated according to the following formula:

$$Sim(Q,T) = \frac{\sum_{i=1}^{p}(1-D(Q_i,T_i))}{p} * \frac{area\left(\bigcup_{i=1}^{p}Q_i\right)+area\left(\bigcup_{i=1}^{p}T_i\right)}{area(Q)+area(T)}$$

in which:

p represents the number of regions whose similarity is greater than the threshold ε and which have not been excluded during the previous exclusion step.

This formula is given by way of example but it would also be possible to calculate the similarity based on any other formula that took account of the distance between attributes as well as the areas of the regions matched while weighting them.

**Claims**

1. Method for measuring visual similarity between two images (Q, T), one image (Q) being referred to as the model and one image (T) being referred to as the target, comprising a prior step (E2) of segmenting the images into regions ($Q_i$, $T_i$), with each region there being associated at least one attribute (F) representative of at least one characteristic of the region, comprising the steps of

   - calculating (E3) the visual similarity between the pairs ($Q_i$, $T_i$) of possible regions of the two images (Q, T),
   - selecting (E4) a certain number of pairs ($Q_i$, $T_i$) of regions whose similarity is greater than a first fixed threshold (ε),
   - calculating (E9) the global similarity between the two images, based on the pairs ($Q_i$, $T_i$) of regions selected,

**characterized in that** the step (E3) of calculating the visual similarity between the pairs ($Q_i$, $T_i$) of possible regions of the two images (Q, T) takes into account the distance (D($Q_i$, $T_i$)) between the said attributes (F) of the regions ($Q_i$, $T_i$) matched and the areas of the regions ($Q_i$, $T_i$) matched.

2. Method according to Claim 1, **characterized in that** it furthermore comprises after the selection step (E4) and before the step (E9) of calculating global similarity, a step of exclusion (E5) on the basis of the list of pairs ($Q_i$, $T_i$) of regions selected, pairs of regions ($Q_i$, $T_i$) for which the ratio between their areas is greater than a second threshold ($\alpha$) or less than the inverse ($1/\alpha$) of the said second threshold.

3. Method according to one of the preceding claims, **characterized in that** the step (E3) of calculating the visual similarity between the pairs of possible regions of the two images weights (w) the distance (D) between the said attributes (F) of the regions ($Q_i$, $T_i$) matched and the fraction between the surface area of the regions matched over the surface area of the two images.

4. Method according to one of the preceding claims, **characterized in that** the step (E3) of calculating the visual similarity between the pairs ($Q_i$, $T_i$) of possible regions of the two images (Q, T) and the step (E4) of selecting a certain number of pairs of regions ($Q_i$, $T_i$) whose similarity is greater than a first fixed threshold ($\varepsilon$) comprise for all the regions of the model image (Q), the substeps of

   - selecting a region of the model image,
   - measuring the visual similarity between the region traversed and the regions of the target image,
   - selecting the region exhibiting the greatest visual similarity with the image traversed.

5. Method according to the preceding claim, **characterized in that** the substep of selecting a region of the model image, selects the regions of the model image according to their ascending order of surface area.

6. Device for measuring visual similarity between two images, comprising means for segmenting the images into regions, with each region there being associated at least one attribute representative of at least one characteristic of the region, comprising:

   - means of calculating the visual similarity between the pairs ($Q_i$, $T_i$) of possible regions of the two images (Q, T),
   - means of selecting a certain number of pairs ($Q_i$, $T_i$) of regions whose similarity is greater than a first fixed threshold ($\varepsilon$),
   - means of calculating the global similarity between the two images (Q, T), based on the pairs ($Q_i$, $T_i$) of regions selected,

   **characterized in that** the means of calculating the visual similarity between the pairs of possible regions ($Q_i$, $T_i$) of the two images (Q, T) are able to take into account the distance (D) between the said attributes (F) of the regions ($Q_i$, $T_i$) matched and the areas of the regions ($Q_i$, $T_i$) matched, the said device preferably being suitable for implementing the method according to one of Claims 1 to 5.

7. Computer program product **characterized in that** it comprises program code instructions able to implement the method according to one of Claims 1 to 3 when the program is executed on a computer.

Example image Q

Candidate image T

Visual similarity ?

Fig. 1

Fig. 2

E1 — Select an image Q

E2 — Segment Q into regions Qi and calculate the attributes of the regions $Q_i$

E3 — Calculate the similarity between the regions ($Q_i$, $T_i$) E(Qi, Ti) = f (D(Qi, Ti), area(Qi), area (Ti))

E4 — E(Qi, Ti) $\geq \mathcal{E}$

E6 — ($Q_i$, $T_i$) not selected

E5 — $\dfrac{area(Q_i)}{area\ (T_i)} > \alpha$ or $< \dfrac{1}{\alpha}$

E7 — Append ($Q_i$, $T_i$) to calculate the global similarity

E8 — All pairs (Qi, Ti) matched

E9 — Calculate the global similarity Sim(Q,T)

**European Patent Office**

**EUROPEAN SEARCH REPORT**

Application Number

EP 04 01 3935

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | A. NATSEV, R. RASTOGI, K. SHIM: "WALRUS: A similarity retrieval algorithm for image databases" PROCEEDINGS OF THE 1999 ACM SIGMOD INTERNATIONAL CONFERENCE ON MANAGEMENT OF DATA, 1999, pages 395-406, XP002273338 Philadelphia, Pennsylvania, United States | 1,4-7 | G06F17/30 G06T7/00 |
| Y | * page 396, section "1.2 Our contributions", paragraphs 1-3 * <br> * pages 398-399, section "4. Image similarity model", "Definitions 4.1 - 4.3" * <br> * page 402, section "5.5 Image Matching ...", last two paragraphs * | 2,3 | |
| Y | EP 0 713 186 A (CANON KK) 22 May 1996 (1996-05-22) | 2 | |
| A | * page 2, line 45 - line 47 * <br> * page 3, line 3 - line 11 * <br> * page 6, line 7 - line 38 * <br> * figure 4 * | 1,3-7 | |
| Y | BYOUNGCHUL KO, HYERAN BYUN: "Multiple Regions and Their Spatial Relationship-Based Image Retrieval" PROCEEDINGS OF THE INTERNATIONAL CONFERENCE ON IMAGE AND VIDEO RETRIEVAL, CIVR 2002, 19 July 2002 (2002-07-19), - 19 July 2002 (2002-07-19) pages 81-90, XP002273339 London, UK * page 2, first paragraph * <br> * page 82, section "2 A brief Overview" * <br> * page 84, paragraph "In our system..." and equation 2 * <br> * page 86, second paragraph * | 3 | TECHNICAL FIELDS SEARCHED (Int.Cl.7) <br><br> G06F <br> G06T |

-/--

The present search report has been drawn up for all claims

| Place of search | Date of completion of the search | Examiner |
|---|---|---|
| Berlin | 29 October 2004 | Ellerbrock, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

**European Patent Office**

**Application Number**

EP 04 01 3935

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | KAP LUK CHAN. XUEJIAN XIONG. FAN LIU. PURNOMO R: "CONTENT-BASED IMAGE RETRIEVAL USING REGIONAL REPRESENTATION" MULTI-IMAGE ANALYSIS. 10TH INTERNATIONAL WORKSHOP ON THEORETICAL FOUNDATIONS OF COMPUTER VISION, 12 March 2000 (2000-03-12), - 17 March 2000 (2000-03-17) pages 238-250, XP001189014 DAGSTUHL CASTLE, GERMANY * page 240, section "3. Content-based image retrieval", first paragraph * * page 244, sections "AreaVector" and "FeatureSet Construction" * * page 245, section, "Definition of RMD" and equation 8 * ----- | 1-7 | |
| | | | **TECHNICAL FIELDS SEARCHED** (Int.Cl.7) |

The present search report has been drawn up for all claims

| Place of search | Date of completion of the search | Examiner |
|---|---|---|
| Berlin | 29 October 2004 | Ellerbrock, T |

## ANNEX TO THE EUROPEAN SEARCH REPORT
## ON EUROPEAN PATENT APPLICATION NO.

EP 04 01 3935

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2004

| Patent document cited in search report | | Publication date | Patent family member(s) | | Publication date |
|---|---|---|---|---|---|
| EP 0713186 | A | 22-05-1996 | JP | 8137908 A | 31-05-1996 |
| | | | JP | 3478627 B2 | 15-12-2003 |
| | | | JP | 8190568 A | 23-07-1996 |
| | | | JP | 8194716 A | 30-07-1996 |
| | | | JP | 8202728 A | 09-08-1996 |
| | | | JP | 8202733 A | 09-08-1996 |
| | | | EP | 0713186 A1 | 22-05-1996 |
| | | | US | 6181818 B1 | 30-01-2001 |
| | | | US | 6246804 B1 | 12-06-2001 |

For more details about this annex : see Official Journal of the European Patent Office, No. 12/82